# EUROPEAN PATENT APPLICATION

(11) **EP 1 765 026 A2**
(43) Date of publication of application: **21.03.2007**
(21) Application number: 06120710.6
(22) Date of filing: 14.09.2006
(51) Int. Cl.: H04Q 7/34

(54) **Allocation of a performance indicator among cells in a cellular communication system**

(30) Priority: 19.09.2005 GB 0519004
(71) Applicant: Agilent Technologies, Inc., Santa Clara, CA 95051 (US)
(72) Inventor: Hurst, Michael, South Queensferry, Lothian EH30 9TG (GB)
(74) Representative: Coker, David Graeme

(57) **Abstract**

A performance indicator is allocated among a plurality of cells in a cellular communication system, in order to monitor operation of the system as experienced by a user thereof, by monitoring occurrence of signalling messages in the system.

## Description

This invention relates to methods and apparatus for allocation of a performance indicator among a plurality of cells in a cellular communication system, for example in order to monitor operation of the system as experienced by a user thereof.

### Background Art

The so-called third generation (3G) mobile communications system, also known as the Universal Mobile Telecommunications System (UMTS), is being implemented using various kinds of Code Division Multiple Access (CDMA) technologies. To enable efficient use (and re-use) of limited resources such as codes, the system is implemented on the basis of so-called "cellular" techniques. The geographical operating area of a mobile communications system is notionally divided into cells, and each cell is allocated a respective "scrambling" code that is applied to communications in that cell so they can be distinguished from communications in neighbouring cells.

The radio access network (RAN) in a UMTS mobile communication network is the most complex and non-deterministic part the network. It is generally necessary to adjust continually the RAN's operational parameters to optimise things like radio coverage, interference, cell capacity and Quality of Service (QoS) as perceived by the network users. To accomplish this optimisation it is necessary to make measurements on the performance of the RAN. This has been typically done by "drive testing", in which a vehicle, equipped with a specially-adapted mobile phone handset (User Equipment, UE) coupled to measurement and data logging equipment, is driven around the operational area of the network while the UE is controlled to attempt to place calls via the network. The operation of the UE is monitored and recorded to collect various measurements on RAN activity from which "key performance indicators" (KPIs) may be calculated.

The nature of drive testing allows these performance indicators to be plotted against geographic location or cell site, and hence to target RAN adjustments. For example, performance indicators like dropped call rate or data throughput (bit rate) may be collected by the drive test system on a cell basis.

Measurements on RAN activity can also be collected more easily and at less cost by monitoring signalling and user data that traverse terrestrial links of the RAN (the UMTS Terrestrial Radio Access Network: UTRAN) in the course of operation of the system to provide service to users. However there is a subtle difficulty in allocating these measurements to a cell in a manner that appropriately represents the operation of the system as experienced by users. This difficulty arises because the UTRAN employs a feature known as soft handover. A UE in soft handover has active radio links to multiple cells at the same time. Thus it is not immediately apparent how measurements such as call drop or data throughput should be allocated on a per cell basis. To resolve this in drive test or UE-based measurement collection, these measurements are assigned to the optimal or "best" cell as determined by the UE. The UE selects a "best cell" as being the cell with the largest value of Common Pilot Channel (CPICH) Ec/Io (a dimensionless ratio of the average power of a channel, such as the pilot channel, to the total signal power) or Received Signal Code Power (RSCP), or smallest value of Pathloss (estimated using information about the transmitted level of the primary common control channel, which is broadcast on BCCH, and measurements of the received level of this channel).

Measurements to be collected on a cell basis by a UTRAN monitoring system need to determine "best cell" in the same way as a UE. One way of achieving this would appear to be for the UTRAN to command the UE to periodically report measurements of CPICH Ec/Io, RSCP and Pathloss. Measurements relating to that UE (such as data throughput or a call drop) can then be allocated to "best cell" for that UE. However there are a number of practical difficulties:

1. The Radio Network Controller (RNC) may be incapable of commanding the UE to supply periodic updates on CPICH Ec/Io, RSCP and Pathloss for cells it can observe:
periodic reporting of these measurements is optional in the UTRAN specifications. Another possibility is that the network operator may choose not enable periodic measurement reports because of the additional signalling traffic generated.

2. The "best cell" as reported by the UE may be one with which it is not currently in active soft handover (although a soft handover is likely to be imminent). In this case any measurements should be associated with the "next best cell" with which the UE is in active soft handover.

3. Similarly, the UE may have removed the radio link to the cell that was "best" in the most recent measurement report, subsequently to the measurement being made. Again, the "next best cell" with which the UE has an active soft handover should be taken as the "best cell" for the measurements.

4. The UE may not provide a measurement result for the current "best cell" in a measurement report. This could be because it failed to make a measurement on that cell, or that it was commanded to return a one-off set of measurements that did not include that cell. In this case the most recent set of measurements for the cell from previous measurement reports should be retained for a short while.

5. The UE may not have any radio links active at all, but may be using a shared channel to a particular cell. In this case there are usually no measurement reports sent to the UTRAN. Further, the UE may choose to change cell from time to time using the cell update procedure. Any measurements should be associated with the current cell to which communications are being directed over the shared channels.

### Disclosure of Invention

According to one aspect of this invention there is provided a method of allocating a performance indicator among a plurality of cells in a cellular communication system, in order to monitor operation of the system as experienced by a user thereof, comprising:
monitoring occurrence of signalling messages in a cellular communication system;
selecting messages containing measurement reports from mobile units in the communication system, and messages containing update information regarding active sets of wireless communications links associated with mobile units; and
extracting information from the selected messages and using the extracted information to allocate a performance indicator among a plurality of cells in the cellular communication system.

According to another aspect of this invention there is provided apparatus for allocating a performance indicator among a plurality of cells in a cellular communication system, in order to monitor operation of the system as experienced by a user thereof, comprising:
a monitor for monitoring occurrence of signalling messages in a cellular communication system; and
a processor for selecting messages containing measurement reports from mobile units in the communication system, and messages containing update information regarding active sets of wireless communications links associated with mobile units, and for extracting information from the selected messages and using the extracted information to allocate a performance indicator among a plurality of cells in the cellular communication system.

### Brief Description of Drawings

A method and apparatus in accordance with this invention, for allocation of a performance indicator among a plurality of cells in a cellular communication system, will now be described, by way of example, with reference to the accompanying drawings, in which:
- Figure 1: is a schematic illustration of a 3G mobile communications network;
- Figure 2: is a schematic block diagram of a monitoring system for monitoring signalling links in the network of Figure 1;
- Figure 3: is an overall flow chart of a method for determining KPIs;
- Figures 4A to 4C: illustrate selection of processing steps in accordance with kind of signalling message detected by a monitoring system.

### Detailed Description

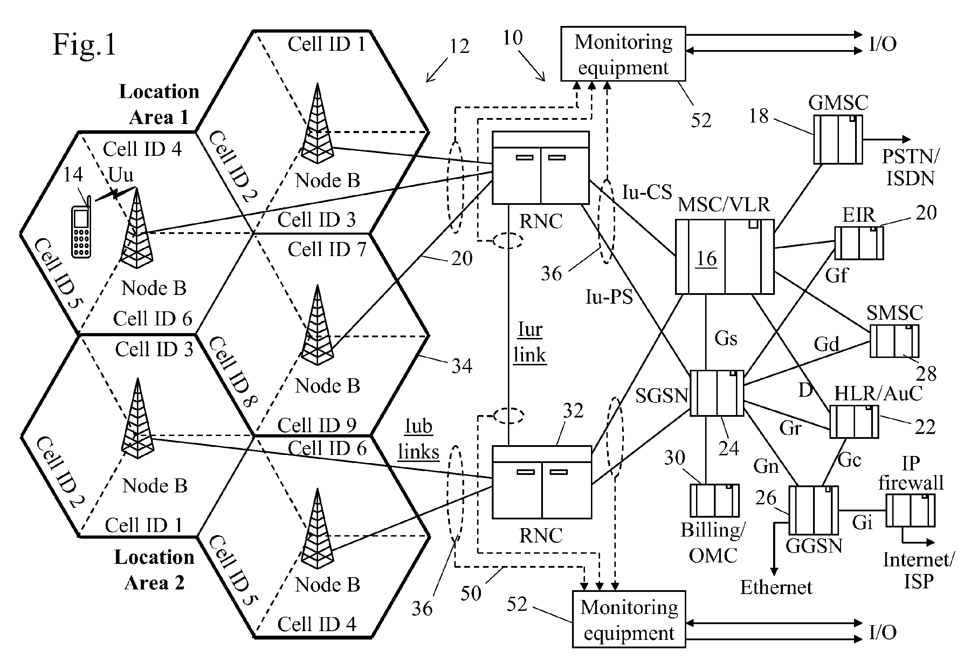

Figure 1 is a schematic illustration of principal components of a 3G mobile communications network, including a core network 10 using UMTS technology, a UTRAN 12 and UEs 14. The core network comprises circuit-switched (CS) and packet-switched (PS) domains, and includes the following main elements:
- a Mobile services Switching Centre (MSC) 16, often combined with a Visitor Location Register (VLR), for routing communications between different UEs 14 and from UEs 14 to other communications systems (as described below);
- a Gateway MSC (GMSC) 18, for routing communications to the Public Switched Telephone Network (PSTN) and to Integrated Services Digital Network (ISDN) resources;
- an Equipment Identity Register (EIR) 20, which maintains a list of authorised, fraudulent and faulty UEs 14;
- a Home Location Register (HLR) and Authentication Centre (AuC) 22, which maintains information relevant to provision of services to subscribers associated with the operator controlling the HLR 22, and provides authentication services to ensure security of operation;
- a Serving GPRS Support Node (SGSN) 24, which performs similar functions for GPRS to those performed by an MSC in GSM systems;
- a Gateway GPRS Support Node (GGSN) 26, which provides inter-networking via an IP firewall with external packet-switched networks, such as the global internet and customers' own intranets;
- a Short Message Service Centre (SMSC) 28 for coordinating provision of SMS text message services
- Operations Support Systems (OSS) facilities 30, including billing and an Operations and Management Centre (OMC).

The UTRAN includes multiple RNCs 32 (somewhat comparable in functionality to a GSM Base Station Controller - BSC) each of which coordinates the operation of multiple Node B facilities 34 (somewhat comparable to a GSM Base Transceiver Station - BTS), for which it is the Controlling RNC. Each Node B (shown in Figure 1 with an idealized hexagonal coverage area) hosts one or more cells (typically three, as indicated by the dashed lines dividing the hexagons). Each Node B 34 contains antennae and associated rf equipment for providing rf links to the UEs 14. A UE 14 that is involved in a soft handover has multiple radio links at the same time with multiple cells. If these soft handover radio links are to cells controlled by more than one RNC 32, then all communications between the core network and that UE 14 are routed through one of these RNCs 32, known as the "Serving RNC" for that UE; communications via cells controlled by an RNC 32 other than the Serving RNC are routed to that other RNC (a "Drift RNC") via the Serving RNC and an Iur link (described below).

Various interfaces and associated protocols are specified for communications among the entities in the core network and the UTRAN, including:
- Gi, for communications between the GGSN 26 and the external internet;
- Gc, for communications between the GGSN 26 and the HLR/AuC 22;
- Gn, for communications between the GGSN 26 and the SGSN 24;
- Gr, for communications between the SGSN 24 and the HLR/AuC 22;
- Gf, for communications between the SGSN 24 and the EIR 20;
- Gd, for communications between the SGSN 24 and the SMSC 28;
- Gs, for communications between the SGSN 24 and the MSC/VLR 16;
- Iu-PS, for (packet-switched) communications between the SGSN 24 and the RNCs 32;
- Iu-CS, for (circuit-switched) communications between the MSC/VLR 16 and the RNCs 32;
- Iur, for communications between different RNCs 32;
- Iub, for communications between an RNC 32 and its associated Node Bs 34; and
- Uu (air interface), for communications between Node Bs 34 and a UE 14.

As noted above, network operators use various Key Performance Indicators (KPIs) as one tool for monitoring and managing the operation of a mobile communications network. The present invention envisages the collection of data to derive such KPIs by monitoring signalling messages between various elements of the mobile communications network, as an alternative to drive testing.

The monitoring system includes probes 36 for passively monitoring signalling messages traversing the Iub, Iu-CS, Iu-PS and Iur links, as described below. The monitoring is passive in the sense that the operation of the links is undisturbed by the presence of the monitoring system, which simply makes copies of some or all of the message packets it observes traversing the links. The probes 36 are coupled to the links in such a way that the operating characteristics of the links are not significantly altered. In the case of an optical link, for example, the coupling may comprise an optical power splitter and for an electrical link it may be a bridging isolator.

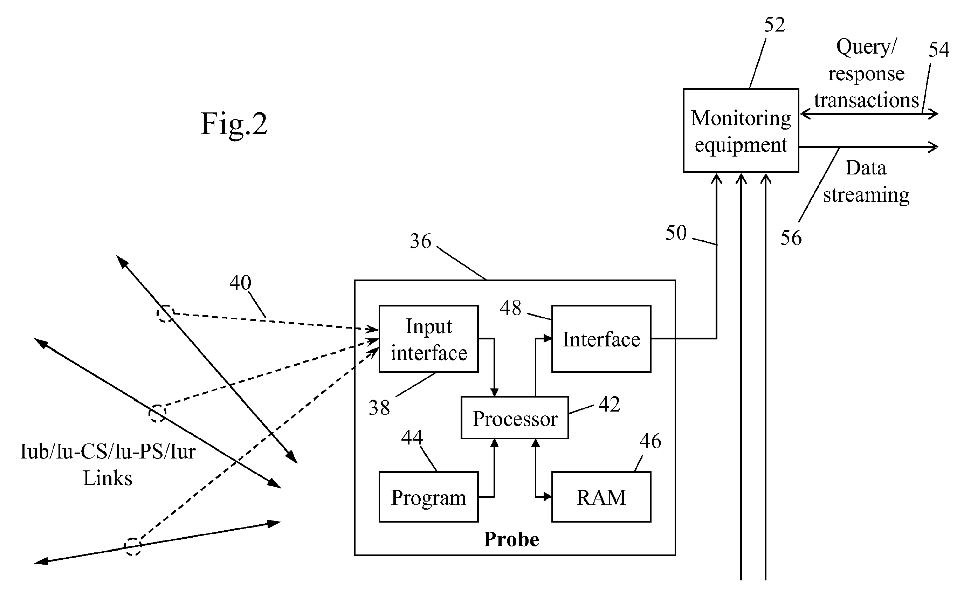

As shown in Figure 2, each probe 36 has an input interface 38 which receives and conditions the signal received over a line 40 from the coupling to the relevant link and which supplies the signal to a processor/CPU 42 operating under the control of software program instructions in a program store 44 and using a random access store 46. The processor 42 extracts messages from the signal and performs some initial processing (e.g. error checking and preliminary decoding). The messages are subsequently forwarded via an interface 48 and a communications bus 50 to monitoring equipment 52 for any necessary additional decoding and for further analysis as described below. This monitoring equipment has a processor, program store and random access store as described above for the probes 36, and provides responses to specific queries on current or historic measurement data via a input/output port 54, and a real-time measurement data stream relating to active mobile stations on an output port 56. The probes 36 may comprise for example components of acceSS7 system equipment available from Agilent Technologies for monitoring messages traversing SS7 signalling networks.

In order to facilitate efficient and robust use of wireless spectrum resources, a 3G mobile communication system uses spread-spectrum techniques to distribute the energy of each user's communications signals throughout the waveband allocated to the system. A transmitter combines each user signal with a respective "spreading code" to distribute the energy in the desired manner. The family of spreading codes used by a transmitter is selected so that they are all mutually orthogonal, enabling a receiver to recover an encoded signal by combining it with the particular spreading code used to encode it. Each transmitter's signals are further combined with a respective Primary Scrambling Code (PSC), specific to that transmitter, so that every transmitter is able to make use of the full family of spreading codes.

In the following description the phrase "Cell ID" is used to refer to any value that may be used to provide an indication of the identity of a cell in a cellular communications system. One option for practical implementation of a Cell ID in a 3G system is to use the 16-bit C-ID value defined in the 3GPP document TS 25.433 ("UTRAN Iub interface Node B Application Part (NBAP) signalling"), section 9.2.1.9. However this value is unique only within each individual RNC. With soft handover to a Drift RNC the same C-ID value representing different cells may occur- one C-ID value local to the Serving RNC, one C-ID local to a Drift RNC. Therefore another option is to discover (by examination of the content of relevant signalling messages on interfaces between functional components of the network) the value of the duple <RNC-ID, C-ID> for use as Cell ID. The value of <RNC-ID, C-ID> will be unique within any one Public Land Mobile Network (PLMN).

In order to allocate key performance indicators (KPIs) to the "best cell" when a UE has multiple soft handover legs a KPI Call Trace function is used to determine the "best cell". This function involves two parts: tracking potential "best cell" states in a Call Trace Table (as described below) for cases where there is a choice among possible cells; and determining the "best cell" for every message that is incorporated into the KPI counts - according to the nature of the message this determination may make use of the "best cell" indication in the Call Trace Table. It both cases it is assumed that the appropriate entry in the Call Trace Table is identified for each received message, by correlating messages with UE sessions.

There are two particular practical situations that must be correctly handled. The first is when the UE has no dedicated Radio Bearers (radio resource used for transfer of user data between the UE and the core network) but is using a common channel such as the Random Access Channel (uplink, RACH)/Forward Access Channel (downlink, FACH) for low data-rate user plane communications. The second is when the UE is in soft-handover mode with more than one cell, but CPICH measurements have not been received from the UE. Both these scenarios are handled by tracking a back-up to the "best cell" normally derived from measurement reports.

Data structures
The "best cell" determination procedure to be described can be implemented for example by use of a table or other data structure (herein referred to as a Call Trace Table) to facilitate the correlation of signalling and user plane messages relating to an individual call or session (while the UE is in the connected state). The data items that are stored in this data structure, for each active UE for which a "best cell" is to be determined, are in the exemplary embodiment of the invention as follows (for the sake of clarity, data items to implement correlation between messages and calls/sessions in known manner have been omitted):

**Call Trace Table**

| Field | Description |
|---|---|
| *best_cell* | The current "best cell" for allocating KPIs. This consists of two sub-fields as follows: |
| | *rnc_id* the controlling RNC for the cell (0 if locally monitored RNC; RNC-ID for a cell at a Drift RNC). |
| | *c_id* the 16 bit C-ID, or 0 if the "best cell" is not known. |
| *backup_best_cell* | This is used as a back-up for determining "best cell" when no measurement reports have been received from the UE, or the "best cell" is otherwise ambiguous. As for *best_cell,* this consists of two sub-fields: |
| | *rnc_id* the controlling RNC for the cell (0 if locally monitored RNC; RNC-ID for a cell at a Drift RNC). |
| | *c_id* the 16 bit C-ID, or 0 if there have been no common channel frames for this UE. |
| | It is set from every message detected on a common channel (common channels are directly associated with one cell) or from an Active Set Update message associated with the latest cell added to the *active_set* list (see below). |
| *cell_meas_list* | The most recent set of Cell CPICH Ec/Io, RSCP and Pathloss measurements from the UE. Each entry in the list has the following sub-fields: |
| | *psc* Primary Scrambling Code of the cell. |
| | *ec_io* Most recent CPICH Ec/Io measurement for this cell. |
| | *ec_io_conf* Confidence in the CPICH Ec/Io measurement. This is set to a maximum value of *rnc_max_meas_conf* (suggested value 3) on receipt of a Radio Resource Control (RRC) Measurement Result message containing a new value of this measurement for this Primary Scrambling Code; it is decremented (limiting at zero) if a RRC Measurement Result message is received without a new value of this measurement for this cell. The measurement value is not used in "best cell" determination if the confidence is zero. |
| | *rscp* Most recent CPICH RSCP measurement for this cell. |
| | *rscp_conf* Confidence in the CPICH RSCP measurement, determined in a manner analogous to *ec_io_conf* as described above. |
| | *pathloss* Most recent pathloss measurement for this cell. |
| | *pathloss_conf* Confidence in the pathloss measurement, determined in a manner analogous to *ec_io_conf* as described above. |
| | This list should be initialised to empty when the Call Trace Table entry is created at initial UE connection. |
| *active_set* | Tracks the cells associated with the active set of radio links simultaneously involved in a specific communication service between the UE and the UTRAN. Implemented as a variable-length list with each entry containing the following sub-fields (there should not be more than one entry with the same Primary Scrambling Code or same (non-zero) <RNC-ID, C-ID> pair): |
| | *rnc_id* the controlling RNC for the cell (0 if locally monitored RNC or if the Cell ID is not known; RNC-ID for a cell at a Drift RNC). |
| | *c_id* the 16 bit C-ID, or 0 if the C-ID is not known. |
| | *psc* Primary Scrambling Code. |
| *pending_rl_adds* | List of radio links in the process of being set up on Iub or Iur interfaces. Implemented as a variable-length list with each entry containing the following sub-fields: |
| | *rnc_pc* the controlling RNC for the cell (0 if locally monitored RNC, Message Transfer Part (MTP) point code for a cell at a Drift RNC). |
| | *c_id* the 16 bit C-ID. |
| | *rl_id* radio link id. (Soft handover legs on different RNCs may have the same radio link id, so the *rnc_pc* field and/or *tr_id* field should also be used to avoid ambiguity). |
| | *tr_id* transaction id for this radio link set up procedure. |
| | *ok* set to False on occurrence of a Radio Link Setup Request or Radio Link Addition request; set to True on occurrence of a Radio Link Setup Response or Radio Link Addition Response that confirms the set-up of the radio link. |
| *pending_psc_adds* | List of Primary Scrambling Codes requested to be added to the active set. Updated upon occurrence of Active Set Update and RRC Connection Setup messages. |
| *pending_psc_removes* | List of Primary Scrambling Codes requested to be removed from the active set. Updated upon occurrence of Active Set Update messages. |

Two subsidiary tables are conveniently implemented. One is for mapping RNC-IDs of Drift RNCs to SS7 Point Codes, and contains the following fields:

**Drift RNC Table**

| Field | Description |
|---|---|
| *rnc_id* | Drift RNC Identity. |
| *rnc_pc* | MTP Point Code of the Drift RNC. |
| *confidence* | Confidence in the RNC-ID to MTP Point Code mapping. A confidence indicator to reduce problems caused by occasional false correlations, or if there are two RNCs in the network with duplicate IDs or Point Codes. This indicator is a number between 0 and *rnc_rnc_pc_conf_limit* (suggested value 4). A value greater than or equal to a threshold *rnc_rnc_pc_conf_ok* (suggested value 2) indicates good confidence in the RNC-ID to MTP Point Code mapping. |

Efficient use of the RNC Table is facilitated by enabling fast look-up by either of *rnc_id* and *rnc_pc,* for example via a hash function.

The second subsidiary table provides <RNC-ID, C-ID> to Primary Scrambling Code mapping. Each row of the table contains the following fields (this table is separate from the Call Trace Table described above, but is populated by events involving the Call Trace Table as described below):

**Cell Table**

| Field | Description |
|---|---|
| *rnc_id* | RNC Identity. Set to zero for a locally monitored cell. |
| *c_id* | 16 bit cell identity. |
| *psc* | Primary Scrambling Code |
| *confidence* | Confidence in the Cell ID to Primary Scrambling Code mapping. A confidence indicator to reduce problems caused by occasional false correlations. This indicator is a number between 0 and *rnc_cell_psc_conf_limit* (suggested value 4). A value greater than or equal to a threshold *rnc_cell_psc_conf_ok* (suggested value 2) indicates good confidence in the Cell ID to PSC mapping. |

Efficient use of the Cell Table is facilitated by enabling fast look-up by the duple *<rnc_id, c_id>.* There is not necessarily a one-to-one correspondence between Cell ID and Primary Scrambling Code: cells may share the same Primary Scrambling code if they are sufficiently geographically separated such that they do not interfere.

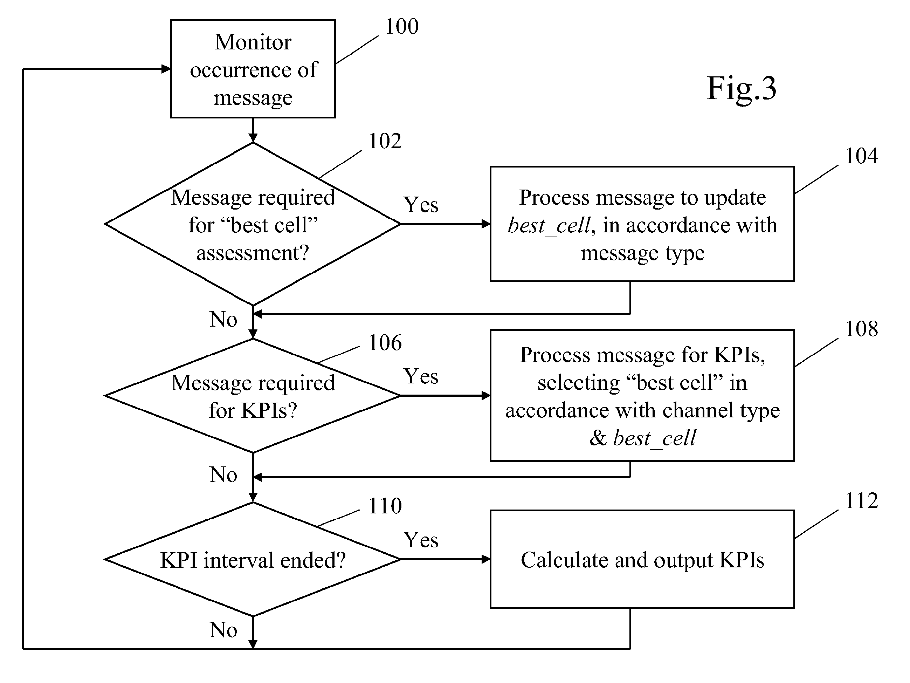

Figure 3 shows in outline form a procedure that is implemented in the monitoring equipment 52 upon receipt of each monitored signalling message from the probes 36. A signalling message is observed to occur at step 100, whereupon a first test is performed at step 102 to determine whether the message is a of kind that is relevant to "best cell" determination (these kinds of messages are described more fully below). If the message is of that kind, then the message is processed at step 104 in accordance with the message type to update the determination of "best cell", as described below.

In either case a further test is then performed at step 106 to determine whether the message is of a kind, for example that contains a block of user data, that is relevant to determination of KPIs. If so the message is processed for KPI determination at step 108, the resulting KPI information being allocated to an optimal or "best" cell as described below in accordance with the "best cell" information maintained at step 104.

KPIs are usually measured over successive sample (or counting) periods, to enable time-dependent variations to be detected. Accordingly a third test is performed at step 110, to determined whether the sample period of any KPI has ended. If so the relevant KPIs are calculated and output at step 112.

Thereafter the procedure returns to step 100 for occurrence of another monitored signalling message.

Allocating KPI updates to "best cell"
When a KPI count is being updated (step 108), the Call Trace Table is used to determine the optimal choice of "best cell" to which a KPI update should be allocated. KPIs may be generated using various different techniques. For example, a counter may be used to record events relevant to a KPI during a predetermined sample period. This may be implemented logically as a table of one or more counters indexed by "best cell". These counters are updated during a sample period according to the parameter being monitored. At the end of a sample period (as determined at step 110) the contents of the counters are output (or otherwise processed) and the counters are cleared, ready for the next sample period.

For each KPI, the "best cell" index into the counters for selecting the counter to be updated is determined using the following (in order of preference):

(1) If the message is detected on a common channel (typically RACH/FACH or DSCH]) then the "best cell" is the cell associated with that common channel. Shared channels are specific to one cell and hence data transported over a shared channel should control the KPIs associated with that cell.

(2) If the message is detected on a dedicated channel (e.g. DCH) and the *best_cell* field in the Call Trace Table is not null, then use the value in that field that as the "best cell".

(3) If the message is detected on a dedicated channel (e.g. DCH) and the *best_cell* field in the Call Trace Table is null, then use the value in the *backup_best_cell* field as the "best cell". The criteria for storing values in the *backup_best_cell* field are such that there will always be a value in this field for every call/session.

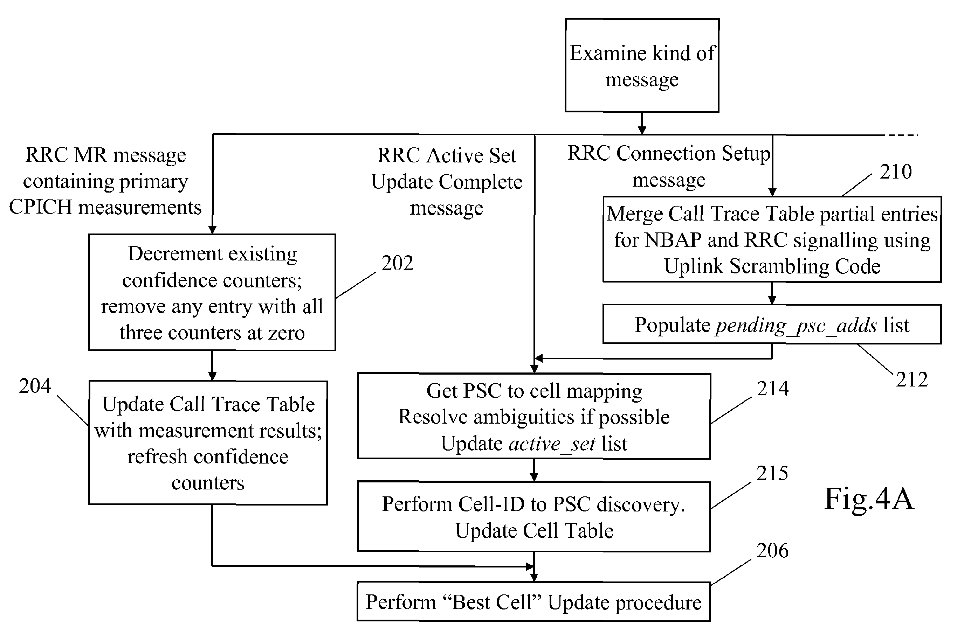

Tracking "best cell" state
Different actions are undertaken at step 104 of Figure 3 to update the Call Trace Table in response to occurrence of signalling messages and other data frames on the signalling links, depending upon the nature of the message or frame that is observed. The different kinds of messages and the respective actions taken are summarised in Figures 4A to 4C.

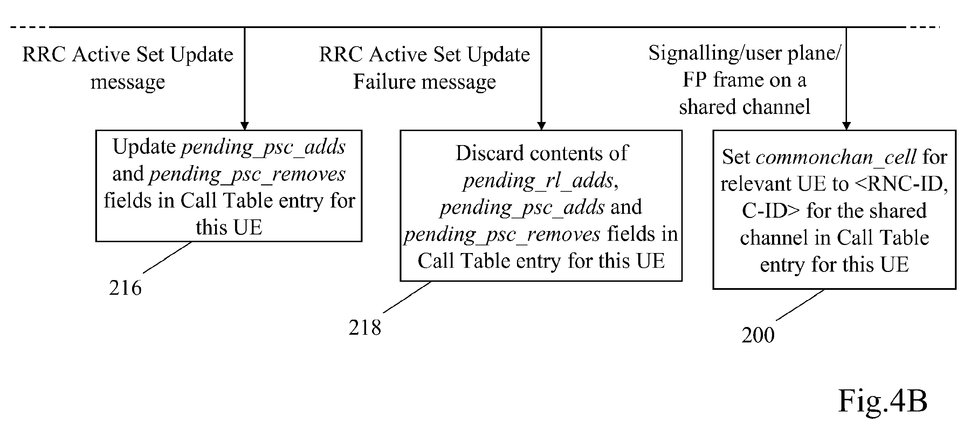

On occurrence being observed of any signalling or user plane frame (or just Frame Protocol (FP) frame) on a shared channel (currently these are RACH, FACH, DSCH, DCH, PCH and HS-DSCH) the fields *best_cell* and *backup_best_cell* for the relevant UE are set to the RNC-ID (0 for local Iub) and C-ID associated with that shared channel (step 200 in Figure 4B). Common channels are directly associated with one cell. The association may be configured or learned from monitoring the signalling messages. A UE that is communicating over a shared channel inherently has the cell associated with that shared channel as its "best cell". This is because macro-diversity does not apply to shared channels.

If an RRC Measurement Report message containing primary CPICH measurements (intra-frequency measurement result list → cell measured result → primary CPICH information) is observed, the following processing is applied (steps 202 to 206 in Figure 4A; these steps are not performed for a received Measurement Report message that does not contain this information, though the Measurement Report message may be used elsewhere (e.g. for the downlink BLER KPIs - step 108 in Figure 3):

- (Step 202) For every cell entry in *cell_meas_list* in the Call Trace Table entry for this call, decrement the three confidence counters *ec_io_conf, rscp_conf* and *pathloss_conf,* down to a limit of zero. If all three confidence counters for a cell reach zero then remove that cell entry from *cell_meas_list:* this has the effect of deleting obsolete measurements for cells that are no longer being reported.

- (Step 204) For each cell (identified by Primary Scrambling Code) for which there are measured results in the RRC Measurement Report message do the following.
(i) Extract the measurements as available: CPICH Ec/Io (signal to interference ratio), CPICH RSCP (received scrambling code power) and Pathloss;
(ii) If there is already an entry in *cell_meas_list* for the Primary Scrambling Code then update the measurement results sub-fields *ec_io, rscp* and *pathloss* with the extracted measurements, and set the corresponding confidence counters back to the value *rnc_max_meas_conf;*
(iii) If there is currently no entry in *cell_meas_list* for the Primary Scrambling Code then create a new entry, and store the extracted measurements in the appropriate measurement results sub-fields. Initialise the corresponding confidence counters to *rnc_max_meas_conf.*

- (Step 206) Implement the "Best cell" Update procedure described below.

Updating the *active_set* field
The following procedures maintain the *active_set* field in the Call Trace Table. They also contribute to the discovery of the Cell ID to PSC mapping in the Cell Table. Except where stated, it is assumed that the Call Trace Table entry for the call is already located from the appropriate key field(s) in the message. Correlation of Iub and Iur messages to individual UE sessions is known to those skilled in the art of monitoring links at an RNC (or at a GSM BSC). Such call tracking is an existing feature (for example under the name Call Trace) of commercially available protocol analysers, such as those available from Agilent Technologies. Each procedure depends on the particular nature of the signalling message that is observed:

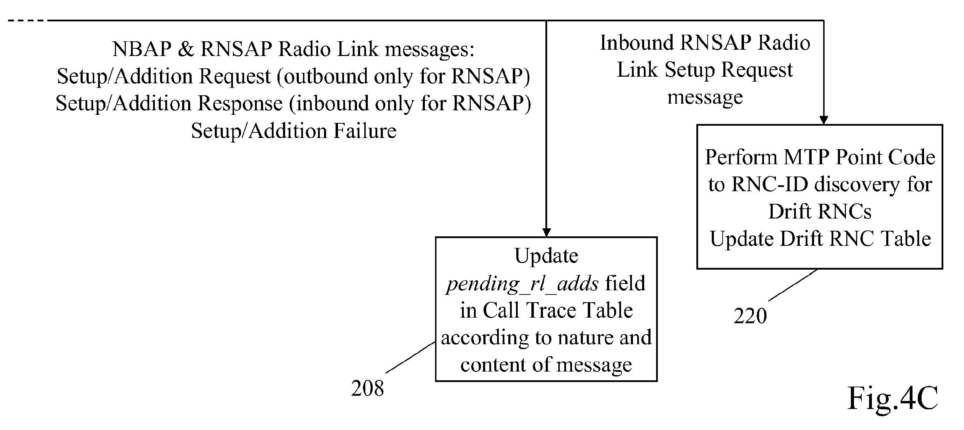

NBAP Radio Link Setup Request message and NBAP Radio Link Addition Request message: (Step 208, Figure 4C) For each radio link ID included in the message, a new entry is added to the list of pending radio links in the field *pending_rl_adds* in the Call Trace Table entry for the associated call:
- *rnc_pc* =: 0 (this is the locally monitored RNC)
- *c_id* =: C-ID from the message
- *rl_id* =: radio link id from the message
- *tr_id* =: transaction id from the message
- *ok* =: false (the set-up of this radio link has not been confirmed yet)

NBAP Radio Link Setup Response message and NBAP Radio Link Addition Response message: These messages are sent to confirm successful set up/addition of all radio links included in the previous matching Radio Link Setup / Radio Link Addition message. Upon occurrence of these messages the following steps are taken:
- Search the *pending_rl_adds* list in the Call Trace Table entry for the session to find pending radio links with *rnc_pc =* = 0 and *tr_id* = = transaction id from the message.
- Set subfield *ok* to True for all these radio links.

NBAP Radio Link Setup Failure message and NBAP Radio Link Addition Failure message: These messages are sent set if one or more of the radio link set-ups/additions included in the previous matching Radio Link Setup/Radio Link Addition message failed. There may still be set-up/additions that succeeded. Upon occurrence of these messages the following steps are taken:
- Search the *pending_rl_adds* list in the Call Trace Table entry for the session to find pending radio links with *rnc_pc =* = 0 and *tr_id =* = transaction id from the message.
- From this set of pending radio links set *ok* = True for those radio links where *rl_id* is in the list of successful radio links in the message.
- Remove pending radio links where *rl_id* is in the list of unsuccessful radio links in the message.

Radio Network Subsystem Application Part (RNSAP) Radio Link Setup Request message and RNSAP Radio Link Addition Request message: Only outbound messages of this type should be processed - that is messages travelling from the monitored RNC to another RNC over the Iur links. These messages are processed in the same manner as for the NBAP Radio Link Setup Request and NBAP Radio Link Addition Request messages described above, except that the *rnc_pc* sub-field in the *pending_rl_adds* list should be set to the MTP Destination Point code (DPC) from the message. This enables radio links at Drift RNCs to be distinguished.

RNSAP Radio Link Setup Response message and RNSAP Radio Link Addition Response message: Only inbound messages of this type should be processed - that is messages travelling from another RNC to the local monitored RNC over the Iur links. Upon occurrence of these messages the following steps are taken:
- Search the *pending_rl_adds* list in the Call Trace Table entry for the session to find pending radio links with *rnc_pc* = = MTP Originating Point code (OPC) of the message and *tr_id =* = transaction id from the message.
- Set subfield *ok* to True for all these radio links.

RNSAP Radio Link Setup Failure message and RNSAP Radio Link Addition Failure message: Upon occurrence of these messages the following steps are taken:
- Search the *pending_rl_adds* list in the Call Trace Table entry for the session to find pending radio links with *rnc_pc* = = MTP OPC of the message and *tr_id* = = transaction id from the message.
- From this set of pending radio links set *ok* = True for those radio links where *rl_id* is in the list of successful radio links in the message.
- Remove pending radio links where *rl_id* is in the list of unsuccessful radio links in the message.

RRC Connection Setup message: (Steps 210, 212, 214, 215 and 206, Figure 4A) This message is sent in response to an RRC Connection Request message when a UE initially attempts to connect to the network. At this point two separate Call Trace Table entries will be active, one for the NBAP Radio Link Setup to the Node B and one for the RRC connection to the UE, as up to this point there has been no common data in the signalling to link the NBAP and RRC signalling for the same call/session. On occurrence of an RRC Connection Setup message the two Call Trace Table entries are merged using the Uplink Scrambling Code (which is different from the Primary Scrambling Code) as the correlating key (step 210). Then the *pending_psc_adds* list is populated (step 212) with the set of primary scrambling codes in the radio link addition information parameter in the RRC Connection Setup message (this parameter is described in 3GPP TS 25.331, section 10.3.6.68). Thereafter the active set update and cell discovery steps (214, 215), as described below for RRC Active Set Update Complete messages, are performed.

RRC Active Set Update message: (Step 216, Figure 4B) Upon occurrence of this message the following steps are undertaken:
- Any existing contents of the *pending_psc_adds* and *pending_psc_removes* lists in the Call Trace Table entry for the associated call are discarded. Active set updates are "atomic" - any existing data in these lists for this call probably means a previous Active Set Update Complete / Failure message has been missed.
- The *pending_psc_adds* list is populated with the set of primary scrambling codes in the radio link addition information parameter in the Active Set Update message (this parameter is described in 3GPP TS 25.331, section 10.3.6.68).
- The *pending_psc_removes* list is populated with the set of primary scrambling codes in the radio link removal information parameter in the Active Set Update message (this parameter is described in 3GPP TS 25.331, section 10.3.6.69).

RRC Active Set Update Failure message: (Step 218) An active set update operation either completes successfully for all radio links, or does not complete at all. On occurrence of an Active Set Update Failure message any contents in the *pending_rl_adds, pending_psc_adds* and *pending_psc_removes* lists in the Call Trace Table entry for the associated call are discarded.

RRC Active Set Update Complete message: (Steps 214, 215 and 206, Figure 4A) Occurrence of the Active Set Update Complete message is a trigger for doing Cell ID to Primary Scrambling Code discovery, updating active set information for the call and recalculating the "best cell" for the call. Upon occurrence of this message the following steps are undertaken:

(A1) If the *pending_psc_adds* list in the Call Trace Table is empty then jump to step (A15) below to do any active set removals.

(A2) If there is just one scrambling code in the *pending_psc_adds* list and just one radio link in the *pending_rl_adds* list then continue to step (A3); otherwise jump to step (A11) below.

(A3) As there is only one radio link to add, this is an unambiguous mapping of C-ID and PSC. If the *rnc_pc* sub-field associated with the pending radio link = = 0 (indicating it is a local RNC) then jump to step (A7) with rnc_id = 0; otherwise proceed to step (A4).

(A4) This is a cell at a Drift RNC. Look up the *rnc_pc* in the RNC Table. If this look-up is successful and the indicated confidence is greater than or equal to the parameter *rnc_rnc_pc_conf_ok* then get the associated *rnc_id* value and jump to step (A7); otherwise continue with step (A5).

(A5) The point code to RNC-ID mapping has not yet been discovered for this point code. Add a new entry to the *active_set* list in the Call Trace Table containing the following values (this new entry should replace any existing entry with the same Primary Scrambling Code - the occurrence of this step implies that a previous active set removal message has been overlooked, as there cannot be more than one cell in the active set with the same Primary Scrambling Code; it is preferable to correct this now):
- *rnc_id* =: 0
- *c_id* =: 0
- *psc* =: the sole PSC from the *pending_psc_adds* list.

(A6) Jump to step (A15) to do any radio link removals, followed by the "best cell" update procedure.

(A7) Invoke the Cell to Primary Scrambling Code mapping procedure described below, using the RNC-ID, C-ID and Primary Scrambling Code.

(A8) Add anew entry to the *active_set* list in the Call Trace Table, containing the following values (replace any existing entry with a matching Primary Scrambling Code):
- *rnc_id* =: 0 for local cell, or *rnc-id* as obtained from the RNC Table in step (A4) for a Drift RNC
- *c_id* =: *c-id* from the sole entry in the *pending_rl_adds* list
- *psc* =: PSC from the sole entry in the *pending_psc_adds* list

(A9) Also copy *rnc_id* and *c_id* to *backup_best_cell.* This sets this new cell as the back-up in case there is future ambiguity in best cell selection at step 206.

(A10) Jump to step (A15) to do any radio link removals, followed by the "best cell" update procedure.

(A11) Multiple radio links are being added to the active set at the same time. The correlation between the C-IDs in the *pending_rl_adds* and the Primary Scrambling Codes in the *pending_psc_adds* is therefore ambiguous. The discovered information stored in the Cell Table can be used to resolve this in the subsequent steps.

(A12) A temporary copy is made of the *pending_rl_adds* list in the Call Trace Table entry, and each item in the list is augmented with the respective cell's RNC-ID and Primary Scrambling Code: for each radio link in the list, if the *rnc_pc* is non-zero then look up the RNC-ID in the RNC Table as described in step (A4) above; if the RNC-ID cannot be determined or the *ok* confidence flag is False then delete that cell's entry from the temporary copy.

(A13) For each radio link in the temporary copy, use the RNC-ID (0 for local cells) and *c_id* value to look up the Primary Scrambling Code for the cell in the Cell Table. If there is no matching entry for this combination of RNC-ID and C-ID, or there is a matching entry but the *confidence* value for that entry is less than *rnc_cell_psc_conf_ok* then delete that cell's entry from the temporary copy.

(A14) For each Primary Scrambling Code in the *pending_psc_adds* list from the Call Trace Table entry, seek a matching Primary Scrambling Code in the augmented temporary copy of the list of radio links. If a match is found add a new entry to the *active_set* list in the Call Trace Table, containing values for *rnc_id* (0 for local cell), *c_id* and *psc* as described for step (A8) above. If no match is found the PSC is added to the *active_set* list as described for step (A5) above. Any existing matching PSC already in the *active_set* list is over-written.

(A15) Implement any required active set removals: for all Primary Scrambling Codes in *pending_psc_removes,* remove the corresponding entry from the *active_set* list.

(A16) Invoke the "Best Cell" Update procedure described above (step 206).

(A17) Clear the contents of the *pending_rl_adds, pending_psc_adds* and *pending_psc_removes* lists.

"Best cell" Update procedure
The "Best cell" Update procedure (step 206 in Figure 4A) is invoked on receipt of an RRC Measurement Report message containing cell measurements (as described above), or of RRC Connection Setup or RRC Active Set Update Complete messages (described above) indicating a change to the active set of radio links simultaneously involved in a specific communication service between a UE and the UTRAN. The procedure involves the following activities:

- If the *active_set* field for the UE in the Call Trace Table is empty then the corresponding *best_cell* field is set to empty. As there is no radio bearer then any user plane communication must be on RACH/FACH or another shared channel and this will give the cell directly.

- If the *active_set* field is not empty, derive the intersection of the Primary Scrambling Codes in *cell_meas_list* and the Primary Scrambling Codes in *active_set,* and proceed as follows:
(i) If there is no PSC common to the two lists then set the *best_cell* to *backup_best_cell -* choosing the most recent cell added to the *active_set* list, or the most recent common channel cell, is a reasonable back-up.
(ii) If there is at least one PSC common to *cell_meas_list* and *active_set* then select the common PSC that has the best measurement value in *cell_meas_list* (in the sense of highest Ec/Io, highest RSCP, or lowest Pathloss). The order of selection of the best measurement should be highest CPICH Ec/Io, then highest RSCP, then lowest Pathloss. If the C-ID for this PSC is available in *active_set* then copy this RNC_ID and C-ID to *best_cell.* If the C-ID for the PSC is not known then set *best_cell* to empty - in this case it is considered to be preferable to default to the back-up best cell. This situation is envisaged to happen only if there is an addition of more than one radio link to an active set at the same time near to the initial cold start of the system (before Cell ID to PSC discovery has built the Cell Table).

Cell to Primary Scrambling Code mapping (Cell Table)
This procedure is invoked from the Active Set Update Complete procedure (and RRC Connection Setup) procedure at step (A7) if there is an unambiguous mapping of Cell ID to Primary Scrambling Code (multiple cells can share the same Primary Scrambling Code).

(B1) Use the passed RNC-ID and C-ID values to index the Cell Table. If an existing entry is found then skip to step (B3) below.

(B2) No entry found. Add a new entry with the following values.
- *rnc_id* =: passed RNC-ID: 0 for a local cell or RNC-ID for a drift cell.
- *c_id* =: passed C-ID
- *psc* =: Primary Scrambling Code
- *confidence* =: 1

### Terminate this procedure in relation to this message.

(B3) Compare the passed Primary Scrambling Code with *psc* in the existing entry found in the Cell Table: if the values match then increment *confidence,* up to the limit set by *rnc_cell_psc_conf_limit*; if the values do not match then decrement *confidence* - if *confidence* is decremented to zero then remove the table entry.

MTP Point Code to RNC-ID Correlation for Drift RNCs
(Step 220, Figure 4C) This section describes discovery of the RNC-ID and MTP point code associated with a Drift RNC. This is necessary to derive the RNC-ID of the Drift RNC for cells at the Drift RNC that are in the *active_set* list. The RNSAP Radio Link Setup Request message on the Iur link is used for this, as it contains both of these items of data. Upon occurrence of such an (inbound) message the following steps are undertaken to update the RNC Table:

(C1) Use the MTP OPC from the message as an index into the RNC Table; if no existing entry is found with matching *rnc_pc* then skip to step (C3) below to check for an entry with matching RNC-ID, otherwise proceed to step (C2).

(C2) The OPC already exists in the RNC Table. Compare the RNC-ID in the message with the *rnc_id* value in this table entry. If the values match then increment the *confidence* indicator, up to the limit set by *rnc_rnc_pc_conf_limit;* if the values do not match then decrement the *confidence* indicator, and if *confidence* is decremented to zero then remove the table entry. Terminate updating of the RNC Table in response to the message.

(C3) No entry exists in the RNC Table with matching OPC. Use the RNC-ID from the message to index into the table. If no existing entry is found with matching *rnc_id* value then skip to step (C5) below, otherwise proceed to step (C4).

(C4) The RNC-ID exists in the table, but with a different OPC. Decrement the *confidence* indicator of this entry; if decremented to zero then remove the table entry. Terminate updating of the RNC Table in response to the message.

(C5) Neither the OPC nor the RNC-ID in the message currently exist in the RNC Table. Add an entry as follows:
- *rnc_id* =: RNC-ID from the RNSAP Radio Link Setup Request message
- *rnc_pc* =: OPC from the RNSAP Radio Link Setup Request message
- *confidence* =: 1

## Claims

1. A method of allocating a performance indicator among a plurality of cells in a cellular communication system, in order to monitor operation of the system as experienced by a user thereof, comprising:
monitoring occurrence of signalling messages in a cellular communication system;
selecting messages containing measurement reports from mobile units in the communication system, and messages containing update information regarding active sets of wireless communications links associated with mobile units; and
extracting information from the selected messages and using the extracted information to allocate a performance indicator among a plurality of cells in the cellular communication system.

2. The method of claim 1, wherein the extracted information is used to select a best cell as viewed by a mobile unit to which a performance indicator is allocated.

3. The method of claim 1 or claim 2, wherein the messages containing measurement reports contain measurements of Ec/Io, received signal code power (RSCP) and Pathloss as measured by mobile units.

4. The method of claim 3, wherein the performance indicator is allocated among the plurality of cells according to the cell which has associated with it the highest Ec/Io, then highest RSCP, then lowest Pathloss.

5. The method of any one of the preceding claims, wherein the messages containing update information track addition and deletion of soft handover communications links.

6. The method of any one of the preceding claims, wherein a back-up allocation of the performance indicator among the plurality of cells is maintained for use if the criteria for allocation are ambiguous or the mobile unit is using a shared channel.

7. Apparatus for allocating a performance indicator among a plurality of cells in a cellular communication system, in order to monitor operation of the system as experienced by a user thereof, comprising:
a monitor for monitoring occurrence of signalling messages in a cellular communication system; and
a processor for selecting messages containing measurement reports from mobile units in the communication system, and messages containing update information regarding active sets of wireless communications links associated with mobile units, and for extracting information from the selected messages and using the extracted information to allocate a performance indicator among a plurality of cells in the cellular communication system.
